# EUROPEAN PATENT APPLICATION

(11) **EP 3 777 554 A1**
(43) Date of publication of application: **17.02.2021**
(21) Application number: 19815548.3
(22) Date of filing: 28.05.2019
(51) Int. Cl.: A23L 2/52, A23L 29/00, A23L 33/10, A23L 33/175

(54) **BEVERAGE, BEVERAGE PRODUCTION METHOD, OR COMBINATION**

(30) Priority: 05.06.2018 JP 2018107822
(71) Applicant: MITSUBISHI GAS CHEMICAL COMPANY, INC., Chiyoda-ku Tokyo 100-8324 (JP)
(72) Inventor: IKEMOTO, Kazuto, Niigata-shi, Niigata 950-3112 (JP)
(74) Representative: Müller-Boré & Partner Patentanwälte PartG mbB
(86) International application number: PCT/JP2019/021157
(87) International publication number: WO 2019/235306

(57) **Abstract**

The present invention provides a beverage containing pyrroloquinoline quinone and/or a salt thereof, an amino acid and/or a salt thereof, and ascorbic acid and/or a salt thereof, wherein the content of ascorbic acid and/or a salt thereof is two or more mass times the content of pyrroloquinoline quinone and/or a salt thereof.

## Description

### Technical Field

The present invention relates to a beverage in which pyrroloquinoline quinone, an amino acid and/or a salt thereof, and ascorbic acid and/or a salt thereof are blended, and a method for producing the same.

### Background Art

Non-alcoholic beverages (also called soft drinks) are taken habitually as convenient means of hydration, and besides, such beverages give pleasure to consumers having varieties of fondness and needs by flavors and functions rich in variety.

Under the rise in health-consciousness, there rises the demand of sports drinks and energy drinks as beverages in which amino acids are blended. In particular, amino acids having a branched bulky substituent, called BCCA (Branched Chain Amino Acids) are blended in many sports drinks on the assumption of having an effect on fatigue recovery. Further, as taste improvement, there is extensively carried out blending of amino acids to green tea and black tea beverages. For example, by blending an amino acid having umami taste, typified by theanine, palatability is enhanced more.

It is known that pyrroloquinoline quinone has functionalities including cerebral function improvement, blood sugar level improvement, antioxidation, and life extension. Further, pyrroloquinoline quinone also has a mitochondorion-activating function and is expected to be blended in sports beverages.

### Citation List

### Patent Literature

Patent Literature 1: Japanese Patent Laid-Open No. 2010-132599
Patent Literature 2: Japanese Patent Laid-Open No. 2017-175966
Patent Literature 3: Japanese Patent Laid-Open No. 2011-024476
Patent Literature 4: Japanese Patent Laid-Open No. 9-70296

### Non Patent Literature

Non Patent Literature 1: J. Am. Chem. Soc., 1995, 117, 3278-3279

### Summary of Invention

### Technical Problem

It is reported that pyrroloquinoline quinone has an effect of increasing the nerve growth factor by being combined with an amino acid, particularly glycine, L-serine or L-tryptophan (Patent Literature 1). For such a reason, beverages are desired in which a combination of an amino acid and pyrroloquinoline quinone is blended.

With regard to beverages containing pyrroloquinoline quinone, a black tea-like beverage (Patent Literature 2) and an alcoholic beverage (Patent Literature 3) have been reported so far.

Pyrroloquinoline quinone, since having a quinone structure, easily reacts with an amino group. In the case where pyrroloquinoline quinone and an amino acid are mixed in a powdery state, the two can stably exist, but it is reported that pyrroloquinoline quinone and amino acid react in a solution state (Non Patent Literature 1, Patent Literature 4). Hence, there is such a problem that when an amino acid is blended in a beverage, the content of pyrroloquinoline quinone remarkably decreases and imidazopyrroloquinoline (IPQ) which is a reaction product with the amino acid is produced. However, conventionally, it is not known that pyrroloquinoline quinone and an amino acid react, and means to prevent the reaction is much less known.

Then, the present inventor has found a phenomenon of acceleratedly generating odors originated from BCAA in a beverage in which the BCAA and pyrroloquinoline quinone are mixed, but no solution thereto is known.

The problem to be solved by the present invention is to lessen the decrease of pyrroloquinoline quinone due to an amino acid in a beverage containing the amino acid and the pyrroloquinoline quinone, and the like.

### Solution to Problem

As a result of intensive studies to solve the above problem, the present inventor has surprisingly found that by incorporating ascorbic acid (vitamin C) in a beverage containing an amino acid and pyrroloquinoline quinone, the decrease of the content of pyrroloquinoline quinone is suppressed. It has further been found that by blending the amino acid after ascorbic acid is mixed with pyrroloquinoline quinone in advance, the decrease of pyrroloquinoline quinone can be more effectively suppressed. It has further been found that ascorbic acid has also an effect of suppressing odors of BCAA.

The present invention includes the following aspects, but is not limited thereto.
[1] A beverage comprising pyrroloquinoline quinone and/or a salt thereof; an amino acid and/or a salt thereof; and ascorbic acid and/or a salt thereof, wherein a content of ascorbic acid and/or a salt thereof is two or more mass times a content of pyrroloquinoline quinone and/or a salt thereof.
[2] The beverage according to [1], wherein the content of the pyrroloquinoline quinone and/or a salt thereof is 10 to 400 mg/L.
[3] The beverage according to [1] or [2], wherein the amino acid comprises at least one of non-essential amino acids, branched chain amino acids and free amino acids.
[4] The beverage according to [3], wherein the non-essential amino acid is glycine; the branched chain amino acid is valine, leucine or isoleucine; and the free amino acid is theanine or ornithine.
[5] The beverage according to any one of [1] to [4], wherein the content of the amino acid is 0.1 mg to 25 g/L.
[6] The beverage according to any one of [1] to [5], wherein the beverage has a pH of 1 to 4.
[7] The beverage according to any one of [1] to [6], further comprising a sweetener.
[8] The beverage according to [7], wherein the sweetener is acesulfame potassium or sorbitol.
[9] The beverage according to any one of [1] to [8], further comprising a cyclodextrin.
[10] A method for producing a beverage according to any one of [1] to [9], comprising a step of mixing pyrroloquinoline quinone and/or a salt thereof with ascorbic acid and/or a salt thereof in the content two or more mass times the content of the pyrroloquinoline quinone and/or the salt thereof, and mixing the resulting mixture with an amino acid and/or a salt thereof.
[11] The method according to [10], wherein the amino acid and/or a salt thereof is mixed after 20 minutes or longer after the mixing of pyrroloquinoline quinone and/or a salt thereof with ascorbic acid and/or a salt thereof.
[12] A combination comprising a mixture comprising pyrroloquinoline quinone and/or a salt thereof and ascorbic acid and/or a salt thereof in the content two or more mass times a content of pyrroloquinoline quinone and/or a salt thereof; and an amino acid and/or a salt thereof.
[13] The combination according to [12], wherein the combination is used for production of a beverage according to any one of [1] to [9].

### Advantageous Effects of Invention

The blending ascorbic acid and/or a salt thereof enables to provide a beverage in which the content of pyrroloquinoline quinone is retained even while the beverage contains an amino acid and/or a salt thereof.

Further according to the present invention, in the case where the amino acid contained in the beverage is a branched chain amino acid, its intrinsic odor can also be suppressed by ascorbic acid and/or a salt thereof.

### Description of Embodiments

### (Beverage)

The beverage according to the present invention is characterized in blending ascorbic acid and/or a salt thereof (hereinafter, referred to also simply as "ascorbic acid") into a combination of pyrroloquinoline quinone and/or a salt thereof (hereinafter, referred to also simply as "pyrroloquinoline quinone") and an amino acid and/or a salt thereof (hereinafter, referred to also simply as "amino acid").

Pyrroloquinoline quinone to be used as a raw material of the beverage according to the present invention is a substance having a structure represented by formula 1. The substance may be present as a free form of pyrroloquinoline quinone, or may be present as a salt thereof. Pyrroloquinoline quinone and/or a salt thereof to be used may be a commercially available one, or can also be produced by a well-known method. The salt of pyrroloquinoline quinone to be used in the present invention includes alkaline metal salts, alkaline earth metal salts and ammonium salts thereof, but is preferably an alkaline metal salt thereof.

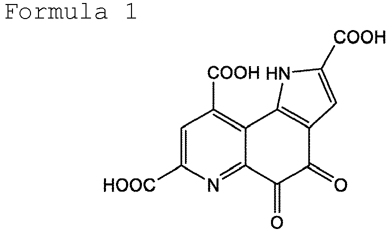

The alkaline metal salt of pyrroloquinoline quinone to be used in the present invention includes salts of sodium, potassium, lithium, cesium, rubidium, and the like. In the point of easy availability, a sodium salt and a potassium salt as the alkaline metal salt are more preferable.

The alkaline metal salt of pyrroloquinoline quinone may be an alkaline metal salt which is obtained by substitution with one to three alkaline metal atoms, and may be any of a monoalkaline metal salt, a dialkaline metal salt and a trialkaline metal salt. Preferable is a dialkaline metal salt. A disodium salt and a dipotassium salt are especially preferable.

Ascorbic acid may be in a form of a salt such as sodium ascorbate or a calcium ascorbate. An ascorbic acid salt is preferably sodium ascorbate, which makes pyrroloquinoline quinone to be hardly deposited in a solution.

Pyrroloquinoline quinone and/or a salt thereof, by being mixed with ascorbic acid, may partially or wholly form a reduced-type pyrroloquinoline quinone and/or a salt thereof in the beverage. The reduced-type pyrroloquinoline quinone has a structure represented by the following formula 2. 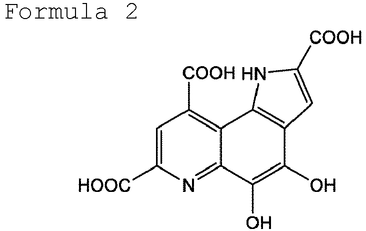 The oxidized-type pyrroloquinoline quinone and/or a salt thereof and the reduced-type pyrroloquinoline quinone and/or a salt thereof, since being easily reduced and oxidized, can be considered to be equivalent; therefore, in the case of referring to the concentration in the beverage, description will be made without distinction between the both. The reduced-type pyrroloquinoline quinone is easily oxidized by oxygen in the air.

The contents of pyrroloquinoline quinone and an amino acid in the beverage can suitably be determined by those skilled in the art according to a desired effect. In one embodiment, the content of pyrroloquinoline quinone and/or a salt thereof in the present invention is 10 to 400 mg/L. A preferable content is 10 to 100 mg/L. In one embodiment, the content of an amino acid is 0.1 mg to 25 g/L.

The content of ascorbic acid and/or a salt thereof is two or more mass times the content of pyrroloquinoline quinone and/or a salt thereof, and may also be, for example, 2.5 or more mass times, 5 or more mass times, 10 or more mass times, or 20 or more mass times. A larger amount of ascorbic acid and/or a salt thereof gives a larger effect of suppressing the decrease of the content of pyrroloquinoline quinone, and the maximum amount of ascorbic acid which can be used is 300 mass times the amount of pyrroloquinoline quinone and/or a salt thereof. The content of ascorbic acid is 30 to 120,000 mg/L, and preferably 1,000 to 10,000 mg/L.

The amino acid to be used in the present invention is not especially limited, and any amino acid can be selected. Examples thereof include essential amino acids selected from the group consisting of histidine, isoleucine, leucine, lysine, methionine, phenylalanine, threonine, tryptophan and valine; non-essential amino acids selected from the group consisting of glycine, asparagine, aspartic acid, alanine, arginine, cysteine, glutamine, glutamic acid, proline, serine and tyrosine; and free amino acids selected from the group consisting of theanine, ornithine, citrulline and taurine. The content of the amino acid is preferably 0.1 mg to 25 g/L, more preferably 50 mg to 1,500 mg/L, and still more preferably 100 mg to 1,200 mg/L.

Among the essential amino acids, branched chain amino acids such as valine, leucine and isoleucine are preferable. Among the non-essential amino acids, glycine is preferable. Among the free amino acids, theanine and ornithine are preferable.

The salt of the amino acid is not especially limited, but examples thereof for acidic groups such as a carboxy group include salts with an alkaline metal such as sodium or potassium, salts with an alkaline earth metal such as calcium or magnesium, ammonium salts, aluminum salts, zinc salts, salts with an organic amine such as triethylamine, ethanolamine, morpholine, pyrrolidine, piperidine, piperazine or dicyclohexylamine, and salts with a basic amino acid such as arginine or lysine. Examples thereof for basic groups such as an amino group include salts with an inorganic acid such as hydrochloric acid, sulfuric acid, phosphoric acid, nitric acid or hydrobromic acid, salts with an organic carboxylic acid such as acetic acid, citric acid, benzoic acid, maleic acid, fumaric acid, tartaric acid, succinic acid, tannic acid, butyric acid, hibenzic acid, pamoic acid, enanthic acid, decanoic acid, teoclic acid, salicylic acid, lactic acid, oxalic acid, mandelic acid or malic acid, and salts with an organic sulfonic acid such as methanesulfonic acid, benzenesulfonic acid or p-toluenesulfonic acid.

As the basic function of pyrroloquinoline quinone, the activation of mitochondria, the cerebral function improvement and the antioxidation are broadly known. On the other hand, the amino acid has functions of fatigue recovery, sleep quality betterment, enhancement of motor function, and mental stabilization. The present invention provides a beverage having functions of both of pyrroloquinoline quinone and the amino acid.

Although the branched chain amino acid is decomposed and emits odors even singly, the present inventor has found that the mixing of pyrroloquinoline quinone and/or a salt thereof in the beverage makes generation of the odors easier. Hence, the blending of ascorbic acid leads to lowering the reactivity of pyrroloquinoline quinone with the branched chain amino acid and is thereby effective also for suppression of the odor generation.

The beverage according to the present invention can be used at a pH of 1 to 9. In the case of sports beverages, a refreshing feeling is often given by making the pH acidic, and the pH can be adjusted preferably to 1 to 4, and more preferably to 2.5 to 5.5. There are cases where an amino acid is further blended in such sports beverages, and it is conceivable that the present invention is especially suitable for such sports beverages.

A substance to be used for adjustment of pH is not especially limited as long as being a substance which can be added to food. There can be used phosphoric acid, citric acid, lactic acid, acetic acid, tartaric acid, malic acid and ascorbic acid. The ascorbic acid functions also as a reducing agent, and can be used also as a pH adjustor. Then, by adding the alkaline metal salt, a buffer effect is exhibited and the pH can be made not to vary.

For the adjustment of the pH, ascorbic acid, citric acid, sodium ascorbate or sodium citrate can preferably be used.

In the case of using pyrroloquinoline quinone and/or a salt thereof, and a reducing agent, particularly ascorbic acid and/or a salt thereof, it is preferable that an amino acid is mixed after an elapse of a predetermined period after their mixing, for example, after an elapse of 20 min or more thereafter. In the case where a reducing agent is mixed after an amino acid and/or a salt thereof and pyrroloquinoline quinone and/or a salt thereof are mixed, the effect cannot be attained.

In the present invention, a mixture containing pyrroloquinoline quinone and/or a salt thereof and ascorbic acid and/or a salt thereof in the content two or more mass times the content of pyrroloquinoline quinone and/or a salt thereof can be used as a raw material for production of the beverage. By using the mixture, stable production can be made.

Into the beverage according to the present invention, various types of additives commonly used for beverages can be blended unless such additives inhibit intended effects. Examples of such additives include sweeteners, acidulants, preservatives, coloring matters and antioxidants. Further, according to the purpose, food components such as fruits juice, coffee extracts, tea leaf extracts and milk components may be added.

For example, a sweetener may be blended according to flavor of a beverage of interest. The exemplary type of the sweetener to be blended includes monosaccharides, disaccharides, isomerized sugar, oligosaccharides, polysaccharides, sugar alcohols, starch syrup and artificial sweeteners, but is not especially limited as long as being allowed to use as a sweetener for food and drink.

The monosaccharide specifically includes glyceraldehyde, threose, arabinose, xylose, ribose, ribulose, xylulose, glucose, mannose, galactose, tagatose, allose, altose, gulose, idose, talose, sorbose, psicose and fructose.

The disaccharide includes trehalose, sucrose and lactose.

The oligosaccharide includes maltotriose, raffinose and cyclodextrin. Among these, cyclodextrin is preferable because it enhances the effect of suppressing the decomposition of pyrroloquinoline quinone by ascorbic acid.

The polysaccharide includes starch syrup and hydrogenated starch syrup.

The sugar alcohol includes threitol, erythritol, adonitol, arabitol, xylitol, talitol, sorbitol, mannitol, iditol, dulcitol and inositol.

The artificial sweetener includes saccharin, aspartame, acesulfame potassium and sucralose. Among these, acesulfame potassium and sorbitol are preferable.

The beverage according to the present invention can be made into a carbonated beverage. Carbonic acid may be blended after a beverage is prepared.

The beverage according to the present invention includes soft drinks defined in the notification based on the Food Sanitation Act (Japan).

The form of the beverage according to the present invention is not especially limited as long as being a beverage containing an amino acid, but examples thereof include sports beverages, fruit beverages, tea beverages, coffee beverages, milky beverages, carbonated beverages, functional beverages and energy drinks. Among these, sports beverages are preferable.

The beverage according to the present invention can be packaged in a container. The form of the container is not limited, and the beverage can be made into a packaged beverage by filling a sealed container such as a bottle, a can or a pet bottle with the beverage.

### (Method for producing the beverage)

The present invention provides a method for producing the beverage, the method comprising a step of mixing pyrroloquinoline quinone and/or a salt thereof with ascorbic acid and/or a salt thereof in the content two or more mass times the content of pyrroloquinoline quinone and/or a salt thereof, and thereafter mixing an amino acid and/or a salt thereof. Although the effect of suppressing the decrease of the content of pyrroloquinoline quinone by ascorbic acid is high, the contact in a short time makes the effect small, and the stability of pyrroloquinoline quinone has a possibility of being lost. Hence, it is preferable that the amino acid is mixed after an elapse of a predetermined period, preferably an elapse of 20 to 70 min or longer, more preferably 30 to 60 min or longer from the mixing of pyrroloquinoline quinone with ascorbic acid. Thereby, the stability of pyrroloquinoline quinone is retained. In the case where a reducing agent is mixed after an elapse of a predetermined period from mixing of an amino acid and/or a salt thereof with pyrroloquinoline quinone and/or a salt thereof, the effect may not be attained in some cases.

It is preferable that the contact of pyrroloquinoline quinone with an amino acid is carried out in a solution, and the temperature in this case is -10°C to 120°C, preferably 10°C to 90°C, and more preferably at room temperature, for example, at about 20°C to 25°C, at which this procedure can easily be carried out.

In production of the beverage, other components can be added simultaneously with the mixing of pyrroloquinoline quinone and/or a salt thereof with ascorbic acid and/or a salt thereof, or the amino acid and other components can be added to the resulting mixture of pyrroloquinoline quinone and/or a salt thereof with ascorbic acid and/or a salt thereof after an elapse of a predetermined period, for example, after the contact for 20 min or longer.

A sweetener and a component for pH adjustment, even if being present when being brought into contact with ascorbic acid, poses no problem, but are blended preferably after pyrroloquinoline quinone and ascorbic acid are mixed. Explaining, as an example, the beverage into which a sweetener is blended, pyrroloquinoline quinone and/or a salt thereof and ascorbic acid and/or a salt thereof are mixed in water, and after an elapse of a predetermined period, for example, after the contact for 30 min or longer, the sweetener and an amino acid and/or a salt thereof are added.

After necessary components are prepared, the resultant is subjected to a sterilization step and a bottle-filling step to thereby complete a packaged beverage. In the sterilization step, heat sterilization or filter sterilization can be used. The heat sterilization may be carried out under the conditions of 90°C or higher and 30 sec or longer. The sterilization is carried out according to needs and can be used without restriction on the conditions.

### (Raw material for the beverage production)

The present invention provides a combination of a mixture containing pyrroloquinoline quinone and/or a salt thereof and ascorbic acid and/or a salt thereof in the content two or more mass times the content of pyrroloquinoline quinone and/or a salt thereof; and an amino acid. By using the mixture containing pyrroloquinoline quinone and/or a salt thereof with ascorbic acid and/or a salt thereof in the content two or more mass times the content of pyrroloquinoline quinone and/or a salt thereof, the beverage production can be carried out with pyrroloquinoline quinone in a stable state.

The present invention will be described in more detail by way of the following Examples, but the scope of the present invention is not any more limited thereto. Those skilled in the art may make various changes and modifications on the present invention, and these changes and modifications are also included in the scope of the present invention.

### Examples

Material: as a pyrroloquinoline quinone disodium salt, BioPQQ (Registered Trademark), manufactured by Mitsubishi Gas Chemical Co., Ltd., was used. Other reagents used were reagents manufactured by Wako Pure Chemical Industries, Ltd.

### HPLC analysis condition

Apparatus: LC-10AD, manufactured by Shimadzu Corp.
Eluate: 100 mM CH₃COOH/100 mM CH₃COONH₄ = 30/70 (pH: 5.1)
Column: YMC-Pack ODS-A 150×φ4.6 mm 5 µm
Column temperature: 40°C
Eluate flow rate: 1.5 ml/min
Detector: UV259 nm
Injection amount: 3 µl
Analysis time: 30 min

### 1. Confirmation of the effect of ascorbic acid

### (Comparative Example 1) No addition of ascorbic acid

An aqueous solution was prepared so that the concentration of the pyrroloquinoline quinone disodium salt became 40 mg/L and the concentration of glycine became 100 mg/L. The resulting aqueous solution was stored at 30°C for five days, and subjected to an HPLC analysis; the result was: 77% of PQQ changed to IPQ.

### (Example 1) Addition of ascorbic acid

An aqueous solution was prepared so that the concentration of the pyrroloquinoline quinone disodium salt became 400 mg/L and the concentration of ascorbic acid became 10 g/L. The resulting aqueous solution was stored at room temperature (25°C) for one day. The resultant aqueous solution was diluted with water so that the concentration of pyrroloquinoline quinone disodium salt became 40 mg/L and the concentration of ascorbic acid became 1 g/L, and glycine was added thereto so as to become a concentration of 100 mg/L to thereby obtain an aqueous solution, which was then stored at 30°C for five days.

As a result of an HPLC analysis of the aqueous solution, pyrroloquinoline quinone having changed to IPQ was 0%. The addition of ascorbic acid suppressed the reaction to IPQ; consequently, a beverage holding PQQ could be produced.

### (Example 1) Addition of ascorbic acid

An aqueous solution was prepared so that the concentration of the pyrroloquinoline quinone disodium salt became 400 mg/L and the concentration of ascorbic acid became 5 g/L. The resulting aqueous solution was stored at room temperature (25°C) for one day. The resultant aqueous solution was diluted with water so that the concentration of the pyrroloquinoline quinone disodium salt became 40 mg/L and the concentration of the ascorbic acid became 0.5 g/L, and glycine was added thereto so as to have a concentration of 100 mg/L to thereby obtain an aqueous solution, which was then stored at 30°C for five days.

As a result of an HPLC analysis of the aqueous solution, pyrroloquinoline quinone having changed to IPQ accounted for 0%. The addition of ascorbic acid suppressed the reaction to IPQ; consequently, a beverage holding PQQ could be produced.

### (Example 3) Addition of ascorbic acid and an acidulant

An aqueous solution was prepared so that the concentration of the pyrroloquinoline quinone disodium salt became 400 mg/L and the concentration of ascorbic acid became 1 g/L. The resulting aqueous solution was stored at room temperature (25°C) for one day. The resultant aqueous solution was diluted with water so that the concentration of the pyrroloquinoline quinone disodium salt became 40 mg/L and the concentration of ascorbic acid became 100 mg/L., and glycine and citric acid were added thereto so as to have concentrations of 100 mg/L and 2 g/L, respectively, to thereby obtain an aqueous solution, which was then stored at 30°C for five days.

As a result of an HPLC analysis of the aqueous solution, pyrroloquinoline quinone having changed to IPQ accounted for 0%. The addition of the acidulant and ascorbic acid suppressed the reaction to IPQ; consequently, a beverage holding PQQ could be produced.

### 2. The effect of ascorbic acid on BCAA

### (Comparative Example 2) No addition of ascorbic acid

An aqueous solution was prepared so that the concentration of the pyrroloquinoline quinone disodium salt became 40 mg/L; the concentration of valine became 500 mg/L; the concentration of leucine became 500 mg/L; and the concentration of isoleucine became 500 mg/L. The pH during the preparation was 5.3. The resulting aqueous solution was stored at 50°C for two days, and thereafter subjected to an HPLC analysis; the result was that pyrroloquinoline quinone having changed to IPQ accounted for 51% and pyrroloquinoline quinone accounted for 49%. A strong aldehyde odor by the combination of pyrroloquinoline quinone and BCAA was generated.

### (Example 4) Addition of ascorbic acid

An aqueous solution was prepared so that the concentration of the pyrroloquinoline quinone disodium salt became 40 mg/L; the concentration of ascorbic acid became 1 g/L; the concentration of valine became 500 mg/L; the concentration of leucine became 500 mg/L; and the concentration of isoleucine became 500 mg/L. The pH during the preparation was 3.6. The resulting aqueous solution was stored at 50°C for two days, and thereafter subjected to an HPLC analysis; the result was that pyrroloquinoline quinone having changed to IPQ accounted for 0%. Hence, it was found that the reaction from pyrroloquinoline quinone to IPQ by amino acids including also BCAA did not occur. Odors caused by branched chain amino acids were not generated.

### 3. Study of the influence by a sweetener

### (Example 5) Addition of a sweetener, acesulfame K (pH: 3)

An aqueous solution was prepared so that the components of raw material had the following concentrations. In the case of mixing pyrroloquinoline quinone disodium salt and ascorbic acid together, 30 min after the mixing of the both, other components were mixed. The resulting aqueous solution was stored at 50°C for four days, and thereafter subjected to an HPLC analysis to measure the recovery of the pyrroloquinoline quinone disodium salt.
The results are shown in the following Table.

**[Table 1]**

| | BioPQQ (mg/L) | Ascorbic acid (mg/L) | Citric acid (mg/L) | Sodium citrate (mg/L) | Amino acid (mg/L) | Acesulfame K (mg/L) | pH | PQQ recovery |
|---|---|---|---|---|---|---|---|---|
| Example 5 | 40 | 1000 | 1200 | 100 | Leucine 200 | 400 | 2.9 | 99 |
| Example 6 | 40 | 1000 | 1200 | 100 | Leucine 400 | 400 | 3.0 | 100 |
| | | | | | Valine 400 | | | |
| | | | | | Isoleucine 400 | | | |
| Comparative Example 3 | 40 | 0 | 1200 | 100 | Leucine 200 | 400 | 2.9 | 30 |
| Comparative Example 4 | 40 | 0 | 1200 | 100 | Leucine 400 | 400 | 3.1 | 10 |
| | | | | | Valine 400 | | | |
| | | | | | Isoleucine 400 | | | |

The measurement results by HPLC of the beverages of Example 5 and Example 6 indicated that PQQ could be recovered in almost nearly 100%, while for Comparative Examples, which contained no ascorbic acid, the content of PQQ in their mixed solutions remarkably decreased.

### (Example 7) Addition of sugar alcohol and measurement of odor

The effect of ascorbic acid was tested by using a sugar alcohol as a sweetener. In addition to the recovery of PQQ, odors of BCAA were checked.

An aqueous solution was prepared so that components of raw material had the following concentrations. Explaining, as an example, the case where pyrroloquinoline quinone disodium salt and ascorbic acid were mixed together in the preparation, the preparation was carried out by mixing the both and 30 min after the mixing, mixing other materials. 100 ml of the resulting aqueous solution was put in a 110-ml glass container, and stored at 50°C for three days. After the container was returned to room temperature, odor was smelled. Further the aqueous solution was subjected to an HPLC analysis to measure the recovery of the pyrroloquinoline quinone disodium salt.
The results are shown in the following Table.

**[Table 2]**

| | BioPQQ (mg/L) | Ascorbic acid (mg/L) | Citric acid (mg/L) | Sodium citrate (mg/L) | Amino acid (mg/L) | Sorbitol (g/L) | pH | Odor | PQQ recovery |
|---|---|---|---|---|---|---|---|---|---|
| Example 7 | 40 | 1000 | 1200 | 100 | Leucine 200 | 50 | 2.8 | absent | 100 |
| Example 8 | 40 | 1000 | 1200 | 100 | Leucine 100 | 50 | 2.8 | absent | 100 |
| | | | | | Valine 40 | | | | |
| | | | | | Isoleucine 40 | | | | |
| Comparative Example 5 | 40 | 0 | 1200 | 100 | Leucine 200 | 50 | 2.9 | slightly present | 45 |
| Comparative Example 6 | 40 | 0 | 1200 | 100 | Leucine 100 | 50 | 2.9 | present | 43 |
| | | | | | Valine 40 | | | | |
| | | | | | Isoleucine 40 | | | | |

Examples 7 and 8 could protect PQQ and also suppress odor.

### (Example 9) Addition of ascorbic acid and fructose

The effect of ascorbic acid was tested by using fructose as a sweetener.

An aqueous solution was prepared so that pyrroloquinoline quinone disodium salt was contained at 40 mg/L; ascorbic acid at 1 g/L; citric acid at 1,200 mg/L; sodium citrate at 100 mg/L; valine at 40 mg/L; leucine at 100 mg/L; isoleucine at 40 mg/L; and fructose at 50 g/L. At 30 min after mixing of pyrroloquinoline quinone disodium salt and ascorbic acid, the other materials were mixed. The pH during the mixing was 3.0. The resulting aqueous solution was stored at 50°C for three days, and thereafter subjected to an HPLC analysis to determine the content of PQQ; the result was that the recovery of PQQ was 81%. The stability in the case of using fructose decreased as compared with sorbitol. However, it was clear by comparison with Comparative Example that the ascorbic acid contributed to the stabilization, and the effect of ascorbic acid to suppress the decrease of the content of pyrroloquinoline quinone is large.

### (Comparative Example 7) No addition of ascorbic acid and addition of fructose

An aqueous solution was prepared so that pyrroloquinoline quinone disodium salt was contained at 40 mg/L; citric acid at 1,200 mg/L; sodium citrate at 100 mg/L; valine at 40 mg/L; leucine at 100 mg/L; isoleucine at 40 mg/L; and fructose at 50 g/L. The pH during the preparation was 3.0. The resulting aqueous solution was stored at 50°C for three days, and thereafter subjected to an HPLC analysis to determine the content of PQQ; the result was that the recovery of PQQ was 25%. In the case where ascorbic acid was not present, PQQ was not sufficiently recovered and the stability of PQQ in the beverage was lost.

### 4. Study of the contact time

### (Example 10) Contact for 60 min before preparation of a beverage

10 ml of a 1% (w/w) ascorbic acid aqueous solution and 2 ml of a 1% (w/w) pyrroloquinoline quinone disodium salt aqueous solution were mixed, and the mixture was stirred at room temperature (20°C) for 60 min. Other raw materials were added to the mixed solution to thereby prepare a beverage having the following composition.
Pyrroloquinoline quinone disodium salt: 40 mg/L
Ascorbic acid: 100 mg/L, Citric acid: 1,200 mg/L
Sodium citrate: 100 mg/L
Leucine: 200 mg/L
Sorbitol: 50 g/L

The resulting beverage was stored at 50°C for three days, and subjected to an HPLC analysis to determine the content of PQQ; the result was that the recovery of PQQ was 97%.

### (Example 11) Contact for 30 min before preparation of a beverage

10 ml of a 1% (w/w) ascorbic acid aqueous solution and 2 ml of a 1% (w/w) pyrroloquinoline quinone disodium salt aqueous solution were mixed, and the mixture was stirred at room temperature (20°C) for 30 min. Other raw materials were added to the mixed solution to thereby prepare a beverage having the following composition.
Pyrroloquinoline quinone disodium salt: 40 mg/L
Ascorbic acid: 100 mg/L, Citric acid: 1,200 mg/L
Sodium citrate: 100 mg/L
Leucine: 200 mg/L
Sorbitol: 50 g/L

The resulting beverage was stored at 50°C for three days, and subjected to an HPLC analysis to determine the content of PQQ; the result was that the recovery of PQQ was 95%.

### (Example 12) No prior contact (simultaneous mixing) before preparation of a beverage

10 ml of a 1% (w/w) ascorbic acid aqueous solution and 2 ml of a 1% (w/w) pyrroloquinoline quinone disodium salt aqueous solution and other raw materials were simultaneously mixed to thereby prepare a beverage having the following composition.
Pyrroloquinoline quinone disodium salt: 40 mg/L
Ascorbic acid: 100 mg/L
Citric acid: 1,200 mg/L
Sodium citrate: 100 mg/L
Leucine: 200 mg/L
Sorbitol: 50 g/L

The resulting beverage was stored at 50°C for three days, and subjected to an HPLC analysis to determine the content of PQQ; the result was that the recovery of PQQ was 91%.

It was found that by previously making ascorbic acid and pyrroloquinoline quinone to come into contact before the preparation of a beverage, stable preparation of a beverage can be conducted, and the stabilization effect was more improved with a longer contact time.

### 5. The effect of ascorbic acid on a free amino acid

### (Comparative Example 8) No addition of ascorbic acid and addition of theanine

An aqueous solution (pH: 6.4) was prepared by simultaneously adding components so that the concentration of the pyrroloquinoline quinone disodium salt became 40 mg/L and the concentration of theanine became 400 mg/L. The resulting aqueous solution was stored at 60°C for seven days, and then subjected to an HPLC measurement; the result was that the recovery of PQQ was 29%.

### (Example 13) Addition of ascorbic acid, theanine and γ-cyclodextrin

An aqueous solution (pH: 2.6) was prepared by simultaneously adding components so that the concentration of the pyrroloquinoline quinone disodium salt became 40 mg/L; the concentration of ascorbic acid, 2,000 mg/L; the concentration of citric acid, 3,000 mg/L; the concentration of theanine, 400 mg/L; and the concentration of γ-cyclodextrin, 5,000 mg/L. The resulting aqueous solution was stored at 60°C for seven days, and then subjected to an HPLC measurement; the result was that the recovery of PQQ was 100%.

### (Example 14) Addition of ascorbic acid, theanine, γ-cyclodextrin and an isomerized sugar

An aqueous solution (pH: 2.7) was prepared by simultaneously adding components so that the pyrroloquinoline quinone disodium salt was contained at 40 mg/L; ascorbic acid at 2,000 mg/L; citric acid at 3,000 mg/L; theanine at 400 mg/L; γ-cyclodextrin at 5,000 mg/L; and an isomerized sugar at 50 g/L. The isomerized sugar used was an isomerized sugar (fructose content: 55% or higher)(hereinafter, the same) of Oji Cornstarch Co., Ltd. The resulting aqueous solution was stored at 60°C for seven days, and then subjected to an HPLC measurement; the result was that the recovery of PQQ was 96%.

### (Comparative Example 9) No addition of ascorbic acid and addition of ornithine

An aqueous solution (pH: 7.5) was prepared by simultaneously adding components so that the concentration of the pyrroloquinoline quinone disodium salt became 40 mg/L and the concentration of ornithine became 400 mg/L. The resulting aqueous solution was stored at 60°C for seven days. The recovery of PQQ on an HPLC was 29%.

### (Example 15) Addition of ascorbic acid, ornithine and γ-cyclodextrin

An aqueous solution (pH: 2.5) was prepared by simultaneously adding components so that the concentration of the pyrroloquinoline quinone disodium salt became 40 mg/L; the concentration of ascorbic acid, 2,000 mg/L; the concentration of citric acid, 3,000 mg/L; the concentration of ornithine, 400 mg/L; and the concentration of γ-cyclodextrin, 5,000 mg/L. The resulting aqueous solution was stored at 60°C for seven days, and then subjected to an HPLC measurement; the result was that the recovery of PQQ was 100%.

### (Example 16) Addition of ascorbic acid, ornithine, γ-cyclodextrin and the isomerized sugar

An aqueous solution (pH: 2.7) was prepared by simultaneously adding components so that the concentration of the pyrroloquinoline quinone disodium salt became 40 mg/L; the concentration of ascorbic acid, 2,000 mg/L; the concentration of citric acid, 3,000 mg/L; the concentration of ornithine, 400 mg/L; the concentration of γ-cyclodextrin, 5,000 mg/L; and the concentration of the isomerized sugar, 50 g/L. The resulting aqueous solution was stored at 60°C for seven days, and then subjected to an HPLC measurement; the result was: the recovery of PQQ was 98%.

From the above results, it was found by addition of ascorbic acid, the reaction from pyrroloquinoline quinone to IPQ did not occur also in the presence of a free amino acid. Then it also became clear that by addition of cyclodextrin, the decrease of pyrroloquinoline quinone by an amino acid could be more effectively prevented.

### Industrial Applicability

According to the present invention, by blending ascorbic acid, a beverage, which retains the content of pyrroloquinoline quinone while containing an amino acid, can be provided. In particular, in the case where the amino acid is a branched chain amino acid, its intrinsic odor is also suppressed by ascorbic acid.

## Claims

1. A beverage comprising:
pyrroloquinoline quinone and/or a salt thereof; an amino acid and/or a salt thereof; and
ascorbic acid and/or a salt thereof, wherein a content of ascorbic acid and/or a salt thereof is two or more mass times a content of pyrroloquinoline quinone and/or a salt thereof.

2. The beverage according to claim 1, wherein the content of pyrroloquinoline quinone and/or a salt thereof is 10 to 400 mg/L.

3. The beverage according to claim 1 or 2, wherein the amino acid comprises at least one of non-essential amino acids, branched chain amino acids and free amino acids.

4. The beverage according to claim 3, wherein the non-essential amino acid is glycine; the branched chain amino acid is valine, leucine or isoleucine; and the free amino acid is theanine or ornithine.

5. The beverage according to any one of claims 1 to 4, wherein a content of the amino acid is 0.1 mg to 25 g/L.

6. The beverage according to any one of claims 1 to 5, wherein the beverage has a pH of 1 to 4.

7. The beverage according to any one of claims 1 to 6, further comprising a sweetener.

8. The beverage according to claim 7, wherein the sweetener is acesulfame potassium and/or sorbitol.

9. The beverage according to any one of claims 1 to 8, further comprising a cyclodextrin.

10. A method for producing a beverage according to any one of claims 1 to 9, comprising a step of mixing pyrroloquinoline quinone and/or a salt thereof with ascorbic acid and/or a salt thereof, and mixing the resulting mixture with an amino acid and/or a salt thereof.

11. The method according to claim 10, wherein the amino acid and/or a salt thereof is mixed after 20 minutes or more after the mixing of pyrroloquinoline quinone and/or a salt thereof with ascorbic acid and/or a salt thereof.

12. A combination comprising a mixture comprising pyrroloquinoline quinone and/or a salt thereof and ascorbic acid and/or a salt thereof in a content two or more mass times a content of pyrroloquinoline quinone and/or a salt thereof; and an amino acid and/or a salt thereof.

13. The combination according to claim 12, wherein the combination is used for production of a beverage according to any one of claims 1 to 9.
